(19) Europäisches Patentamt / European Patent Office / Office européen des brevets

(11) **EP 3 205 494 B1**

(12) **EUROPEAN PATENT SPECIFICATION**

(45) Date of publication and mention
of the grant of the patent:
**25.09.2019 Bulletin 2019/39**

(21) Application number: **15848361.0**

(22) Date of filing: **05.10.2015**

(51) Int Cl.:
*B32B 15/08* [(2006.01)]     *B32B 15/09* [(2006.01)]
*B65D 1/00* [(2006.01)]     *B65D 1/12* [(2006.01)]
*C09D 161/06* [(2006.01)]     *C09D 167/00* [(2006.01)]

(86) International application number:
**PCT/JP2015/078202**

(87) International publication number:
**WO 2016/056510 (14.04.2016 Gazette 2016/15)**

(54) **COATED METAL PLATE AND ORGANIC RESIN-COATED COATED METAL PLATE**

BESCHICHTETE METALLPLATTE UND MIT BESCHICHTETE METALLPLATTE MIT BESCHICHTUNG AUS ORGANISCHEM HARZ

PLAQUE MÉTALLIQUE REVÊTUE ET PLAQUE MÉTALLIQUE REVÊTUE QUI EST REVÊTUE DE RÉSINE ORGANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2014 JP 2014205843**

(43) Date of publication of application:
**16.08.2017 Bulletin 2017/33**

(73) Proprietor: **Toyo Seikan Group Holdings, Ltd.**
**Shinagawa-ku**
**Tokyo 141-8627 (JP)**

(72) Inventors:
• **KASHIWAKURA, Takuya**
**Yokohama-shi**
**Kanagawa 240-0062 (JP)**
• **FUNAGI, Yuji**
**Yokohama-shi**
**Kanagawa 240-0062 (JP)**
• **MIYAI, Tomohiro**
**Yokohama-shi**
**Kanagawa 240-0062 (JP)**

(74) Representative: **J A Kemp**
**14 South Square**
**Gray's Inn**
**London WC1R 5JJ (GB)**

(56) References cited:
WO-A1-2011/061784     WO-A1-2013/047378
WO-A1-2013/047378     WO-A2-2007/025297
JP-A- 2000 178 416     JP-A- 2002 105 393
JP-A- 2002 105 393     JP-A- 2005 097 327
JP-A- 2012 180 591     JP-A- 2013 072 001
JP-A- 2013 072 001     JP-A- 2015 003 450

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field:

This invention relates to a coated metal sheet and a coated metal sheet which is, further, covered with an organic resin film for use in the production of cans. More specifically, the invention relates to a coated metal sheet and a coated metal sheet which is, further, covered with an organic resin film, having excellent dent resistance to cope with acid beverages, having excellent applicability for producing cans, and being capable of providing cans and can lids that have excellent hot water-resistant adhering property without permitting the organic resin film to be peeled even under high temperature and highly humid environment such as of sterilization treatment, the coated metal sheet and the coated metal sheet which is, further, covered with an organic resin film using no chromium and excelling in productivity and economy.

Background Art:

Organic resin-covered metal sheets obtained by covering metal sheets such as of aluminum with an organic resin have long been known as materials for producing cans. It has also been known to subject the above metal sheets to the draw working or the draw· ironing working to produce seamless cans for containing beverages, or to subject the metal sheets to the press-forming to produce can lids such as easy-to-open ends. For example, an organic resin-covered metal sheet having, as an organic resin film, a thermoplastic resin film of a polyester resin comprising chiefly an ethylene terephthalate unit, has been widely used as a material for producing seamless cans (patent document 1).

The seamless cans made from the organic resin-covered metal sheet are often subjected to a severe working such as draw · ironing or draw· redrawing. In the step of heat treatment (heat set) conducted after the can walls have been formed to relax the strain in the inorganic resin film caused by the working, therefore, the organic resin film is often peeled in the flange-forming portion at the open end of the can, hindering the subsequent step of necking or flanging and, depriving the organic resin-covered metal sheet of applicability for producing cans. Therefore, the seamless cans made from the organic resin-covered metal sheet must have excellent applicability for producing cans without permitting the organic resin film to peel off in the step of heat treatment after the can walls have been formed.

Further, the seamless cans made from the metal sheet covered with the organic resin film are exposed to high temperature and highly humid environment such as of the sterilization treatment or the retort treatment that is conducted after the cans that have been formed are filled with the contents and are sealed. In such a case, due to the lack of hot water-resistant adhering property between the organic resin film and the metal base material, the organic resin film often peels at a portion that is subjected to the working (necking or flanging) after the cans have been formed. Therefore, the seamless cans made from the metal sheet covered with the organic resin film must satisfy excellent hot water-resistant adhering property that will not permit the organic resin film to peel even in case the seamless cans are exposed to a high temperature and highly humid environment such as of the sterilization treatment.

However, if the seamless cans made from the organic resin-covered metal sheet happen to be fallen down and receive an external shock (indented) after they have been filled with a content and sealed, it occurs that not only the metal material at the indented portion is deformed but also the organic resin film that is covering the metal sheet is often cracked due to the shock and deformation of the metal material. The cracked portion of the organic resin film could trigger corrosion. In case the content filled therein is a strongly corrosive acid beverage, therefore, the can body is subject to be pierced with holes due to corrosion. It is, therefore, important that the can body is not corroded despite it is fallen down and is indented or receives a shock. This property is called dent resistance and has recently been demanded to be attained to a level to excellently cope with even highly corrosive contents.

Here, when it comes to a metal sheet used as the organic resin-covered metal sheet for producing cans, there has, usually, been used a surface-treated metal sheet of which the surfaces are conversion-treated in order to improve corrosion resistance and to maintain adhesiveness to the organic resin film. As such a surface treatment, there has been known, for example, the treatment with chromic phosphate. The surface-treated metal sheet covered with the organic resin film is obtained by treating a surface-treated metal sheet with the chromic phosphate, and has, therefore, been widely used for producing seamless cans on account of the above-mentioned applicability for producing cans and excellent hot water-resistant adhering property. The above treatment, however, is a treatment that uses a harmful chromium compound. Therefore, it has been urged to employ a surface treatment without using chromium from the standpoint of protecting the environment. Besides, the surface-treating film formed by the treatment with chromic phosphate is a hard inorganic film which is subject to be easily cracked if it is subjected to the formation working or if it receives external shocks. This surface-treating film, therefore, involves problems in regard to property for following up the work and shock resistance. Therefore, the seamless can that satisfies the dent resistance could not be obtained despite there was used the surface-treated metal sheet covered with the organic resin film obtained by using the surface-treated metal sheet that was treated with the chromic phosphate.

Further, there have heretofore been proposed many surface treatments without using chromium for producing cans. For producing seamless aluminum cans coated with an organic resin film, for instance, there has been proposed an organic/inorganic composite conversion treatment using a zirconium compound, a phosphorous compound and a phenol resin, attaining excellent applicability for producing cans and exhibiting excellent hot water-resistant adhering property (patent document 2).

Despite of using the surface-treated metal sheet treated for its surfaces by the above-mentioned chromium-free treatment, however, there was not obtained a seamless can that could satisfy the dent resistance.

On the other hand, there has been proposed an art of using, as organic resin films, thermoplastic resin films comprising a polyester resin containing ionomer and a polyester resin containing dimeric acid (patent documents 3 and 4).

The seamless cans using, as organic resin films, the thermoplastic resin films comprising the polyester resin containing ionomer and the polyester resin containing dimeric acid, are capable of exhibiting excellent dent resistance. However, the polyester resins containing ionomer and dimeric acid are expensive, and involve a problem in economy if they are used for general seamless cans.

As a method of improving corrosion resistance and adhesiveness of the metal plate covered with the organic resin film, further, there has been proposed an art of forming a primer coating on a metal material as an underlying layer for an organic resin film (patent document 5).

However, this art has been proposed for can lids such as easy-open ends made from an organic resin film-covered metal sheet, but is not capable of attaining satisfactory dent resistance or is not applicable for producing cans if it is used to produce the seamless cans that are to be subjected to more severe working conditions. Besides, the above primer coating by itself cannot attain hot water-resistant adhering property to the metal base material. On the metal base material, therefore, it becomes necessary to form, as the underlying layer, a surface-treating film (e.g., an organic/inorganic composite conversion-treated film) that excellently adheres to the primer coating. Therefore, the number of steps increases arousing a problem in productivity and economy.

WO 2013/047378 describes a resin composition obtained by reacting a polyester resin (A) with at least one kind of resin (B) selected from among a polyamine resin, a polyamide-amine resin and a polyamide resin, and its use in adhesives for films or coatings for films.

JP 2013 072001 relates to a resin composition that contains a polyester resin (A), a phenol resin (B), a conductive polymer (C) and a dopant (D).

JP 2002 105393 describes a powder coating composition for providing a steel material with corrosion resistance, which comprises up to 20 mass % of tannin or a tannic acid based on 100 mass parts of a main agent composed of a cured material obtained by curing (a) bisphenol A or an F type epoxy resin and (b) a curing agent in the presence of a catalyst.

WO 2007/025297 relates to coating compositions that include corrosion resisting particles such that the coating composition can exhibit corrosion resistance properties.

WO 2011/061784 describes a surface-treatment liquid for autodeposition coating, which comprises a water-dispersible or water-soluble organic resin (a), ferric ion (b), fluorine element (c), an oxidizing agent (d) and at least one element (e) selected from Bi, Co, Cu, Mn, Ni, Pb, Pt, Sn and Te.

Prior Art Documents:

Patent Documents:

Patent document 1: JP-A-2001-246695
Patent document 2: JP-A-2007-76012
Patent document 3: JP-A-H7-195618
Patent document 4: JP-A-2005-104146
Patent document 5: International Laid-Open WO2007/91740

Outline of the Invention:

Problems that the Invention is to Solve:

It is, therefore, an object of the present invention to provide a chromium-free coated metal sheet and a coated metal sheet further covered with an organic resin film capable of providing cans and can lids that have excellent dent resistance to cope with even strongly corrosive contents, that have excellent applicability for producing cans without permitting the organic resin film to peel in a flange-forming portion at the open end of the can, and that have excellent hot water-resistant adhering property without permitting the organic resin film to peel even if exposed to a high temperature and highly humid environment such as of the step of sterilization and, besides, offering advantage in productivity and economy.

Another object of the present invention is to provide a can body having excellent dent resistance, excellent applicability for producing cans and hot water-resistant adhering property, and a can lid.

Means for Solving the Problems:

According to the present invention, there is provided a coated metal sheet comprising a coating on at least one surface of a metal sheet, the coating containing a main resin, a phenol resin as a curing agent and a tannic acid as an additive, wherein the main resin is a resin that is capable of forming a crosslinked structure with the phenol resin, wherein the phenol resin is contained in an amount in a range of 5 to 40 parts by mass per 100 parts by mass of the main resin, and wherein the tannic acid is contained in an amount in a range of 0.1 to 10 parts by mass per 100 parts by mass of the main resin.

In the coated metal sheet of the present invention, it is desired that:

1. The coating, further, contains an acid catalyst as a curing catalyst;
2. The main resin is at least the one selected from a polyester resin, an acrylic resin and an epoxy resin;
3. The main resin is a polyester resin;
4. The polyester resin has a glass transition temperature (hereinafter often referred to as "Tg") of 15°C to 80°C;
5. As dicarboxylic acid components for constituting the polyester resin, the polyester resin contains an aromatic dicarboxylic acid and an aliphatic dicarboxylic acid having 6 to 14 carbon atoms at a molar ratio of 95:5 to 80:20;
6. The polyester resin has an acid vale of 5 to 40 mgKOH/g;
7. The phenol resin is the one obtained by alkoxymethylating, with an n-butanol, a methylol group of a resol-type phenol resin derived from an m-cresol;
8. The coating is formed by applying, onto a metal sheet, an aqueous coating composition that contains a water-soluble and/or water-dispersible polyester resin, a phenol resin, a tannic acid and an aqueous medium; and
9. The metal sheet is an aluminum sheet.

According to the present invention, further, there is provided a coated metal sheet further covered with an organic resin film obtained by forming an organic resin film on a coating of the coated metal sheet.

According to the present invention, further, there is provided a can body or a can lid made from the coated metal sheet further covered with the organic resin film.

According to the present invention, further, there is provided an aqueous coating composition for a metal sheet containing a water-soluble and/or water-dispersible polyester resin, a phenol resin, a tannic acid and an aqueous medium, wherein the phenol resin is contained in an amount in a range of 5 to 40 parts by mass per 100 parts by mass of the polyester resin, and wherein the tannic acid is contained in an amount in a range of 0.1 to 10 parts by mass per 100 parts by mass of the polyester resin.

Effects of the Invention:

The coated metal sheet of the invention is exemplified by a metal sheet forming thereon a coating that contains a polyester resin as the main resin, a phenol resin and a tannic acid. Therefore, even if the coating of the coated metal sheet is further covered with an organic resin film and is subjected to a severe working to produce seamless cans, there is realized excellent dent resistance lending the seamless cans well suited for containing even strongly corrosive contents such as acidic beverages. Besides, even during the heat treatment conducted after the can walls have been formed, the organic resin film is not peeled at the flange-forming portion proving excellent applicability for producing cans. Besides, the coating that contains the tannic acid exhibits greatly improved hot water-resistant adhering property in the interface between the coating and the metal base material. Even if exposed to a high temperature and highly humid environment such as of the step of sterilization after the cans have been filled with the content, therefore, the organic resin film does not peel and excellent hot water-resistant adhering property is sustained.

Moreover, the coating by itself adheres directly and firmly to the surface of the metal base material eliminating the need of forming a surface-treating coating such as conversion-treating coating on the surface of the metal base material. Therefore the coating of the present invention excels in productivity and economy as compared to the conventional combinations of the primer coating and the surface-treating coating. Besides, use of no chromium is an advantage from the standpoint of exerting reduced burden on the environment.

Moreover, with the coating being formed by using the aqueous coating composition containing the water-soluble and/or water-dispersible polyester resin, phenol resin, tannic acid and aqueous medium which is mostly water, there is obtained advantage in economy and, besides, decreased burden is exerted on the environment as compared to when the coating is formed by using a coating composition of the type of organic solvent.

The above-mentioned effects of the invention will become obvious also from the results of Examples appearing later. That is, when the seamless cans are produced by using the coated metal sheet further covered with the organic resin film that is obtained by forming the organic resin film on the metal sheet that is forming thereon the coating that contains the main resin (polyester resin), phenol resin and tannic acid of the present invention (Examples 1 to 30), there are exhibited not only excellent dent resistance and applicability for producing cans (no peeling of film at the flange portion during the heat treatment) but also excellent hot water-resistant adhering property. By using a metal sheet covered with an organic resin film and forming a coating through only the treatment with chromic phosphate (Comparative Example 6), on the other hand, there are obtained excellent hot water-resistant adhering property and applicability for producing cans, but the dent resistance is poor.

Moreover, by using a metal sheet covered with an organic resin film and forming a similar coating but without containing the tannic acid (Comparative Example 3), there are obtained dent resistance and applicability for producing cans comparable to those of Examples of the present invention, but the hot water-resistant adhering property is poor. Further, by using a metal sheet covered with an organic resin film and forming a similar coating but without containing the phenol resin (Comparative Example 4), there is obtained dent resistance comparable to that of Examples of the present invention, but the applicability for producing cans and the hot water-resistant adhering property are poor. Moreover, by using a metal sheet covered with an organic resin film and forming a similar coating but using a melamine resin as a curing agent (Comparative Example 5), there are obtained dent resistance and applicability for producing cans comparable to those of Examples of the present invention, but the hot water-resistant adhering property is poor.

Brief Description of the Drawing:

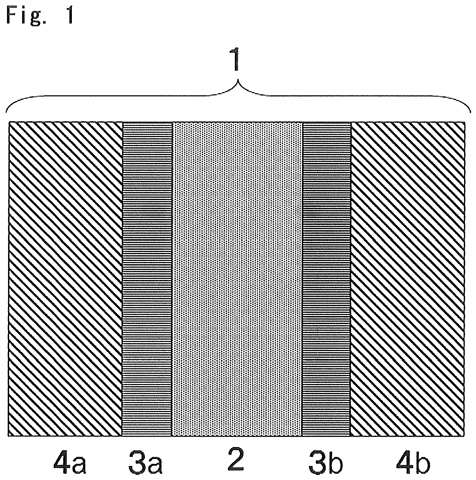

[Fig. 1] is a view illustrating a sectional structure of a coated metal sheet further covered with an organic resin film obtained by forming an organic resin film on a coated metal sheet of the present invention.

Modes for Carrying Out the Invention:

(Coating)

In the coated metal sheet of the invention, an important feature resides in that the coating formed on at least one surface of the metal sheet contains a main resin, a phenol resin as a curing agent and a tannic acid as an additive.

(Main resins)

The main resin used for forming the coating on the metal sheet of the invention is a known resin for coating that is capable of reacting with a phenol resin that is the curing agent, and that has a functional group such as hydroxyl group, carboxyl group, amide group, amino group, methylol group or alkoxymethylated methylol group capable of forming a crosslinked structure with the phenol resin. Examples of the main resin include polyester resin, acrylic resin, epoxy resin, alkyd resin, polyurethane resin, amino resin and phenol resin. These resins can be used in a single kind or in a combination of two or more kinds. Among these resins, preferably used are polyester resin, acrylic resin and epoxy resin from the standpoint of sanitation and corrosion resistance, and particularly preferably used is a polyester resin from the standpoint of close adhesion to the organic resin film formed on the coating, workability and dent resistance.

[Polyester resins]

In the coated metal sheet of the invention, it is desired that the polyester resin that is the main resin and forms the coating has a glass transition temperature (Tg) in a range of 15°C to 80°C, preferably, 20°C to 65°C and, more preferably, 25°C to 55°C. If Tg is higher than the above range, the coating that is formed tends to become hard. In case the can body receives a shock from the exterior (indented), therefore, the coating becomes likely to be cracked, i.e., a decrease in the dent resistance. If Tg is lower than the above range, on the other hand, the coating tends to be cohesively broken due to the lack of heat resistance in a high temperature environment during the heat treatment or the sterilization treatment. As a result, the organic resin coating is often peeled deteriorating the applicability for producing cans or hot water-resistant adhering property. Besides, waterproof property and barrier property against corrosive components often become low and hence deteriorating the dent resistance.

In the invention, further, the coating may be formed by blending together two or more kinds of polyester resins having different Tg's. In this case, too, it is desired that the Tg of the blended polyester resin as calculated from the following formula lies in the above-mentioned range of Tg.

$$1/Tg = (W_1/Tg_1) + (W_2/Tg_2) + ... + (W_m/Tg_m)$$

$$W_1 + W_2 + ... + W_m = 1$$

wherein Tg is a glass transition temperature (K) of a blend of polyester resins, and $T_1$, $Tg_2$, ..., $Tg_m$ are glass transition temperatures (K) of the respective polyester resins (polyester 1, polyester 2, ..., polyester m) that are used, and $W_1$, $W_2$, ..., $W_m$ are weight fraction of the respective polyester resins (polyester 1, polyester 2, ..., polyester m).

As the polycarboxylic acid component constituting the polyester resin, there can be exemplified aromatic dicarboxylic acids such as terephthalic acid, isophthalic acid, orthophthalic acid and naphthalenedicarboxylic acid; aliphatic dicarboxylic acids such as succinic acid, glutaric acid, adipic acid, azelaic acid, sebacic acid, dodecanedioic acid and dimeric acid; unsaturated dicarboxylic acids such as (anhydrous) maleic acid, fumaric acid and adduct of terpene-maleic acid; alicyclic dicarboxylic acids such as 1,4-cyclohexanedicarboxylic acid, tetrahydrophthalic acid, hexahydroisophthalic acid and 1,2-cyclohexenedicarboxylic acid; and polycarboxylic acids having a valence 3 or more, such as (anhydrous) trimellitic acid, (anhydrous) pyromellitic acid and methylcyclohexenetricarboxylic acid, from which one or two or more of them are selected and used.

In the invention, it is desired to use a polyester resin in which the polycarboxylic acid components constituting the polyester resin are chiefly an aromatic dicarboxylic acid and an aliphatic dicarboxylic acid having 6 to 14 carbon atoms at a molar ratio of 95:5 to 80:20 and, specifically, 92:8 to 83:17. This makes it possible to attain a balance among the strength of the coating, heat resistance, waterproof property and shock resistance of the coating. The coating, therefore, exhibits excellent dent resistance, hot water-resistant adhering property and applicability for producing cans. If the amount of the aliphatic dicarboxylic acid is smaller than the above range, the coating has a decreased shock resistance and often dent resistance poorer than that of if the amount thereof is within the above range. If the amount of the aliphatic dicarboxylic acid is larger than the above range, on the other hand, the coating has a decreased strength, a decreased heat resistance and decreased waterproof property, and often has poorer applicability for producing cans, poorer hot water-resistant adhering property and poorer dent resistance than those of if the amount thereof is within the above range.

As the aromatic dicarboxylic acid, there can be exemplified terephthalic acid, isophthalic acid, orthophthalic acid and naphthalenedicarboxylic acid. As the aliphatic dicarboxylic acid having 6 to 14 carbon atoms, there can be exemplified adipic acid, pimelic acid, suberic acid, azelaic acid, sebacic acid and dodecanedioic acid.

The invention specifically uses the terephthalic acid and/or the isophthalic acid as the aromatic polybasic carboxylic acid, and uses the sebacic acid as the aliphatic polycarboxylic acid having 6 to 14 carbon atoms.

As the polyhydric alcohol component that constitutes the polyester resin, though not specifically limited thereto only, there can be exemplified aliphatic glycols such as ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol and 1,9-nonanediol; ether glycols such as diethylene glycol, triethylene glycol, polyethylene glycol, polypropylene glycol and polytetramethylene glycol; aliphatic polyalcohols such as 1,4-cyclohexanedimethanol, 1,3-cyclohexanedimethanol, 1,2-cyclohexanedimethanol, tricyclodecane glycols and hydrogenated bisphenols; and trihydric or more highly hydric polyalcohols such as trimethylolpropane, trimethylolethane and pentaerythritol, from which any one or two or more kinds of them are selected and used in combination.

In the invention, though not limited thereto only, it is desired to use a diol component such as ethylene glycol, propylene glycol, 1,4-butanediol or neopentyl glycol. It is, further, desired that the 1,4-butanediol is contained in an amount of 10 to 50% by mol per the whole diol components.

It is desired that the polyester resin has an acid value in a range of 5 to 40 mgKOH/g and, specifically, 10 to 25 mgKOH/g though not limited thereto only. If the acid value is smaller than the above range, it may become difficult to prepare an aqueous coating material. If the acid value is larger than the above range, on the other hand, the coating easily absorbs water and dent resistance may decrease as compared to if the acid value is within the above range.

A desired acid value can be imparted to the polyester resin by, for example, a method of polymerizing a resin and, thereafter, adding thereto one or two or more kinds of acid anhydrides such as anhydrous trimellitic acid, anhydrous phthalic acid, anhydrous pyromellitic acid, anhydrous succinic acid, anhydrous 1,8-naphthalic acid, anhydrous 1,2-cyclohexanedicarboxylic acid, cyclohexane-1,2,3,4-tetracarboxylic acid-3,4 anhydride, ethylene glycol bisanhydrotrimellitate, 5-(2,5-dioxotetrahydro-3-furanyl)-3-methyl-3-cyclohexene-1, 2-dicarboxylic anhydride and naphthalene 1,8:4,5-tetracarboxylic dianhydride, and conducting a depolymerization reaction in an inert atmosphere.

It is desired that the polyester resin has a number average molecular weight in a range of 5, 000 to 25, 000 though not limited thereto only. If it is smaller than the above range, the formed coating may have a decreased applicability for producing cans, decreased hot water-resistant adhering property and decreased dent resistance. If it is larger than the above range, on the other hand, the reactivity decreases with the phenol resin which is a curing agent component, and the coating may not be cured to a sufficient degree.

If the coating of the coated metal sheet of the invention is formed by using an aqueous coating composition that contains a water-soluble and/or water-dispersible polyester resin, a phenol resin, a tannic acid and an aqueous medium, then it is desired that the water-soluble and/or a water-dispersible polyester resin is a polyester resin of which the carboxylic acid groups in the molecular chains are neutralized and hydrated with a basic compound. In this case, there can be formed a coating having a waterproof property higher than that of the polyester resin of which the polar groups such as sulfonic acid group and phosphoric acid group other than the carboxylic acid group are neutralized and hydrated with the basic compound. Besides, the coating exhibits further improved dent resistance.

As the basic substance used for neutralizing the carboxylic acid groups, there can be exemplified amine compounds and inorganic bases such as sodium hydroxide and potassium hydroxide. It is, however, desired to use a volatile amine compound from such a standpoint that the film after dried and fired no longer contains the basic substance. Concrete examples of the amine compound include alkylamines such as ammonia, trimethylamine, triethylamine and n-butylamine; alcoholamines such as 2-dimethylaminoethanol, diethanolamine, triethanolamine, aminomethylpropanol and dimethylaminomethylpropanol; polyfunctional amines such as ethylenediamine and diethylenetriamine; amines having branched alkyl groups, such as branched alkylamine having 3 to 6 carbon atoms and, specifically, 3 to 4 carbon atoms, like isopropylamine, sec-butylamine, tert-butylamine and isoamylamine; and heterocyclic amines such as saturated heterocyclic amines having one nitrogen atom, like pyrrolidine, piperidine and morpholine. Among them, the 2-dimethylaminoethanol can be favorably used.

[Acrylic resins]

In the coated metal sheet of the invention, the acrylic resin used as the main resin can be an acrylic resin that has heretofore been used for the coating compositions. There can be used the following acrylic resins though not limited thereto only.

Namely, there can be exemplified acrylic resins that are obtained by polymerizing, by such polymerization method as emulsion polymerization, solution polymerization or bulk polymerization;

(i) at least one of carboxyl group-containing radically polymerizable unsaturated monomers, such as $\alpha, \beta$-ethylenically unsaturated carboxylic acids like acrylic acid, methacrylic acid, maleic acid, itaconic acid and crotonic acid; with
(ii) radically polymerizable unsaturated monomers copolymerizable therewith, such as hydroxyalkyl esters having 1 to 8 carbon atoms of acrylic acid or methacrylic acid, like 2-hydroxyethyl acrylate, 2-hydroxyethyl methacrylate, hydroxypropyl acrylate and hydroxypropyl methacrylate; alkyl or cycloalkyl esters having 1 to 24 carbon atoms of acrylic acid or methacrylic acid, such as methyl acrylate, methyl methacrylate, ethyl acrylate, ethyl methacrylate, n-butyl acrylate, n-butyl methacrylate, isobutyl acrylate, isobutyl methacrylate, tert-butyl acrylate, tert-butyl methacrylate, cyclohexyl acrylate, cyclohexyl methacrylate, 2-ethyl hexyl acrylate, 2-ethyl hexyl methacrylate, lauryl acrylate, lauryl methacrylate, stearyl acrylate, stearyl methacrylate and decyl acrylate; acryl-or methacrylamide or derivatives thereof, such as acrylamide, methacrylamide, N-methylacrylamide, N-ethylmethacrylamide, diacetoneacrylamide, N-methylolacrylamide, N-methylolmethacryamide, N-methoxymethylacrylamide, and N-butoxymethylacrylamide; aromatic vinyl monomers such as styrene, vinyl toluene and $\alpha$-methylstyrene; and vinyl monomers such as vinyl propionate, vinyl acetate, acrylonitrile, methacrylonitrile and vinyl pivalate.

The acrylic resin has a number average molecular weight in a range of, desirably, 3,000 to 50,000 and, specifically, 5,000 to 20,000.

Further, the acrylic resin should have an acid value, preferably, in a range of 5 to 100 mgKOH/g from the standpoint of corrosion resistance of the coating.

[Epoxy resins]

In the coated metal sheet of the invention, the epoxy resin used as the main resin can be an epoxy resin that has heretofore been used for the coating compositions. Preferably, there is used a reaction product of a phenol compound such as bisphenol compound with epichlorohydrin though not limited thereto only.

Concrete examples of the bisphenol compound are 2,2'-bis(4-hydroxyphenyl)propane (hereinafter often "bisphenol A"), halogenated bisphenol A, bis(4-hydroxyphenyl)methane (hereinafter often "bisphenol F"), 2,2'-bis(4-hydroxyphenyl)butane and bis(4-hydroxyphenyl)sulfone. Among them, bisphenol A and bisphenol F are preferred, and a mixture thereof is also preferred. In addition to the bisphenol compounds, there can be further exemplified novolak-type polyfunctional phenols condensed with resorcinol, phenol or cresol with formalin.

The epoxy resin may, further, be an epoxyester resin obtained by combining, with a dibasic acid, the reaction product of the phenol compound such as bisphenol compound with the epichlorohydrin. Concrete examples of the dibasic acid include succinic acid, adipic acid, pymellic acid, azelaic acid, and sebacic acid. There can be, further, used hexahydrophthalic acid.

The epoxy resin can, further, be an acrylic-modified epoxy resin obtained by modifying the bisphenol-type epoxy resin by bonding or mixing it with a carboxyl group-containing acrylic resin.

The epoxy resin used in the present invention should have a number average molecular weight in a range of, preferably, 3,000 to 30,000 and, specifically, 8,000 15,000 from the standpoint of balance in workability and corrosion resistance.

It is, further, desired that the epoxy resin has an epoxy equivalent in a range of 1,500 to 5,000.

(Phenol resins)

The invention uses a phenol resin as a curing agent for curing the main resin such as the polyester resin. The phenol resin works as a curing agent for curing the main resin. Upon being combined with the tannic acid as will be described later, however, the phenol resin further works to exhibit hot water-resistant adhering property since the phenol resin and the tannic acid firmly adheres together.

As the phenol resin, there is used a resol type phenol resin obtained by using any one or more kinds of phenol monomers such as o-cresol, p-cresol, p-tert-butylphenol, p-ethylphenol, 2,3-xylenol, 2,5-xylenol, phenol, m-cresol, m-ethylphenol, 3,5-xylenol and m-methoxyphenol being mixed together, and reacting these phenol monomers with formaldehyde in the presence of an alkali catalyst.

In the invention, the phenol resin is desirably the one in which part or whole of the methylol groups contained therein are alkoxymethylated with alcohols having 1 to 12 carbon atoms from the standpoint of reactivity with the main resin such as polyester resin. Specifically, it is desired to use the resol type phenol resin derived from the m-cresol and of which the methylol group is alkoxymethylated with n-butanol.

In the invention, the coating contains the phenol resin in an amount in a range of 5 to 40 parts by mass and, preferably, 10 to 40 parts by mass per 100 parts by mass of the main resin such as polyester resin.

If the content of the phenol resin is smaller than the above range, the coating is not fully cured. In a high-temperature environment such as in the step of heat treatment or in the step of sterilization treatment, therefore, the coating is cohesively broken inside thereof due to lack of heat resistance. As a result, the organic resin film is often peeled deteriorating the applicability for producing cans and the hot water-resistant adhering property. If the content of the phenol resin is larger than the above range, on the other hand, the curing takes place to an excess degree, and the dent resistance often decreases due to a decrease in the shock resistance of the coating.

(Tannic acid)

In the invention, the tannic acid contained in the coating helps greatly improve the hot water-resistant adhering property on the interface between the coating and the metal base material. Therefore, if an organic resin film is formed thereon and a seamless can is formed, there is realized excellent hot water-resistant adhering property that does not permit the organic resin film to peel even if the seamless can is exposed to a high temperature and highly humid environment such as the step of sterilization after the can has been filed with the content.

The tannic acid has a very high affinity to the surface of the metal base material. When the coating composition is applied onto the metal sheet, therefore, the tannic acid in the coating medium is selectively adsorbed by the surface of the metal base material. After the coating is formed, therefore, the tannic acid is made present locally near the interface between the metal base material and the coating while forming a chelate complex with the metal. Therefore, the coating adheres firmly to the metal base material. Moreover, at the time of firing the coating at a high temperature, the tannic acid forms a bond among the molecules thereof and acquires a highly molecular form due to the oxidation reaction specific to the phenols (compounds having phenolic hydroxyl group). Therefore, the tannic acid by itself acquires improved waterproof property and heat resistance making it possible to maintain close adhesion to the metal base material even if it is exposed to high temperature and highly humid environment such as the step of sterilization.

Moreover, the phenol resin present in the coating as a curing agent has a phenolic hydroxyl group like the tannic acid and, therefore, has a high degree of affinity to the tannic acid. Through the firing, further, a bond is formed between the tannic acid and the phenol resin due to the oxidation reaction, i.e., the tannic acid and the phenol resin firmly adhere together. The phenol resin, further, forms a bond to the main resin through the crosslinking reaction. As a result, the whole coating firmly adheres to the metal base material via the tannic acid present in the vicinities of the interface, and excellent hot water-resistant adhering property is exhibited in the interface between the coating and the metal base material.

Further, if a seamless can is formed by using the coated metal sheet further covered with the organic resin film that is obtained by forming the organic resin film on the coating, the organic resin film firmly adheres to the metal base material via the coating. Therefore, there is realized excellent hot water-resistant adhering property that does not permit the organic resin film to peel even if the seamless can is exposed to a high temperature and highly humid environment such as the step of sterilization.

When the coating is formed, the tannic acid is made present locally near the interface between the metal base material and the coating as described above. Therefore, despite the tannic acid is contained in very small amounts, it is allowed to improve the hot water-resistant adhering property as desired.

Besides, the phenol resin that is the curing agent firmly adheres to the tannic acid. Therefore, the tannic acid helps improve the hot water-resistant adhering property to a sufficient degree in the interface between the coating and the metal base material. In the invention, therefore, it is an important feature to use the phenol resin as the curing agent for curing the main resin in combination with the tannic acid.

The tannic acid is also called tannin and in the present invention, there is no particular distinction between them. The tannic acid may be a hydrolysis-type tannin or a condensation-type tannin, or a decomposed product of tannin obtained by decomposing it by, for example, hydrolysis. As the tannic acid, there can be exemplified hamamelitannin, persimmon tannin, tea tannin, Rhus chinensis Gallnut tannin, Oak Gallnut tannin, myrobalan tannin, divi-divi tannin, algarrobilla tannin, valonia tannin and catechin tannin. There has been placed in the market, for example, "Tannic acid: AL" (produced by Fuji Chemical Industries Co., Ltd.).

It is desired that the tannic acids have number average molecular weights of not less than 200 though not limited thereto only. If the number average molecular weight is less than 200, the tannin may often sublimate at the time of drying by firing at a high temperature, and the hot water-resistant adhering property cannot often be improved as desired.

In the present invention, the tannic acid is contained in the coating in an amount in a range of 0.1 to 10 parts by mass and, preferably, 0.5 to 5 parts by mass per 100 parts by mass of the main resin such as polyester resin. If the content of the tannic acid is smaller than the above range, peeling occurs in the interface between the coating and the metal base material under a high temperature and highly humid condition such as of the sterilization treatment. As a result, the organic resin film often peels, i.e., the hot water-resistant adhering property is deteriorated. If the content of the tannic acid is larger than the above range, on the other hand, the coating has decreased waterproof property and deteriorated dent resistance.

(Acid catalysts)

In the invention, it is desired that an acid catalyst is added to accelerate the crosslinking reaction of the main resin such as polyester resin with the phenol resin and to efficiently attain dense crosslinking at a low temperature in a short period of time.

As the acid catalyst, there can be exemplified sulfuric acid, p-toluenesulfonic acid, dodecylbenzenesulfonic acid, naphthalenesulfonic acid, dinonylnaphthalenesulfonic acid, dinonylnapthalenedisulfonic acid, camphorsulfonic acid, phosphoric acid and amine-neutralized products thereof (those partly or wholly neutralized with an amine compound), and from which one or two or more of them are selected and used in combination. Among these acid catalysts, particularly preferred are organosulfonic acid compounds such as dodecylbenzenesulfonic acid, p-toluenesulfonic acid and camphorsulfonic acid, as well as amine-neutralized products thereof from the standpoint of compatibility with the resin.

It is desired that the acid catalyst is contained in an amount in a range of 0.1 to 5 parts by mass and, specifically, 0.5 to 3 parts by mass per 100 parts by mass of the main resin such as polyester resin though not limited thereto only. If the content of the acid catalyst is smaller than the above range, the curing reaction may not often be accelerated to a sufficient degree. If the content of the acid catalyst is larger than the above range, on the other hand, the coating may possess decreased waterproof property and deteriorated dent resistance.

(Coating composition)

The coating is formed on the metal sheet of the invention, i.e., the coating composition containing the main resin such as polyester resin, phenol resin and tannic acid is applied onto the metal sheet to form the coating. In the coating composition, the phenol resin is contained in an amount in a range of 5 to 40 parts by mass and, preferably, 10 to 40 parts by mass per 100 parts by mass of the main resin 100 while the tannic acid is contained in an amount in a range of 0.1 to 10 parts by mass and, preferably, 0.5 to 5 parts by mass per 100 parts by mass of the main resin. Further, if the acid catalyst is contained, its amount is, desirably, in a range of 0.1 to 5 parts by mass and, specifically, 0.5 to 3 parts by mass per 100 parts by mass of the main resin such as polyester resin.

As described above, further, the coating composition is, desirably, an aqueous coating composition containing the water-soluble and/or water-dispersible polyester resin, phenol resin, tannic acid and aqueous medium. In this case, too, the phenol resin is contained in an amount in a range of 5 to 40 parts by mass and, preferably, 10 to 40 parts by mass per 100 parts by mass of the polyester resin while the tannic acid is contained in an amount of 0.1 to 10 parts by mass and, preferably, 0.5 to 5 parts by mass per 100 parts by mass of the polyester resin. Further, if the acid catalyst is contained, its amount is, desirably, in a range of 0.1 to 5 parts by mass and, specifically, 0.5 to 3 parts by mass per 100 parts by mass of the polyester resin.

As the aqueous medium, there can be used known aqueous medium such as distilled water, ion-exchanged water or pure water and, like the conventional aqueous compositions, can contain an organic solvent such as alcohol, polyhydric alcohol or a derivative thereof. If the solvent is used, its amount is 5 to 30% by weight relative to the resin components in the aqueous coating composition. If contained in an amount in the above range, the solvent helps improve the film formability. The organic solvent is, desirably, amphoteric and its examples include methyl alcohol, ethyl alcohol, isopropyl alcohol, n-butanol, methyl ethyl ketone, butyl cellosolve, propylene glycol monopropyl ether, ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether and 3-methyl-3-methoxybutanol.

(Method of forming the coating on the metal sheet)

There is no specific limitation on the method of forming the coating on the metal sheet. First, to wash the surfaces of the metal sheet such as removing the rolling oil and the anti-corrosive oil, a dewaxing treatment is executed followed by washing with water and surface adjustment. Thereafter, the coating composition containing the main resin such as polyester resin, phenol resin and tannic acid is applied onto the metal sheet and is heated and dried to form the coating.

There is no specific limitation on the dewaxing treatment, and there can be exemplified the washing with an alkali or with an acid that has heretofore been employed for dewaxing metal sheets such as of aluminum or aluminum alloy. In the invention, from the standpoint of close adhesion between the coating and the metal base material, it is desired to execute the washing with an alkali and then with an acid, or the washing with the acid without executing the washing with the alkali. In the above dewaxing treatment, the washing with the alkali is, usually, executed by using an alkaline cleaner while the washing with the acid is executed by using an acid cleaner

There is no specific limitation on the alkaline cleaner, and there can be used, for example, the one that has been used for the ordinary washing with alkali, such as "Surf Cleaner 420N-2" manufactured by Nippon Paint Co., Ltd. There is no specific limitation on the acid cleaner, either, and there can be used inorganic acids such as sulfuric acid, nitric acid and hydrochloric acid. After the dewaxing treatment is executed, fats and oils remaining on the surfaces of the metal sheet are removed by washing with water. Thereafter, water on the surfaces of the metal sheet is removed by blowing the air or by drying with the hot air.

To apply the coating composition containing the main resin such as polyester resin, phenol resin and tannic acid onto the metal sheet, there can be employed a known method such as roll-coating method, spraying method, dipping method or brush-applying method. The coating is fired under the conditions of 150 to 300°C for 5 seconds to 5 minutes and, preferably, 200 to 280°C for 10 seconds to 3 minutes.

The thickness of the coating is not specifically limited but is in a range of 0.1 to 10 $\mu$m and, specifically, 0.3 to 3 $\mu$m in a dry state. If the thickness of the coating is smaller than the above range, a desired dent resistance may not be obtained. Even if the thickness of the coating is larger than the above range, on the other hand, no further improvement is attained in the properties, which is disadvantageous in economy.

The coating exhibits improved dent resistance if it has a large thickness. By controlling the thickness to lie in the above range, therefore, it is made possible to deal with even highly corrosive acidic beverages that contain, for example, salt at high concentrations.

(Organic resin film)

In the coated metal sheet further covered with the organic resin film of the invention, there is no specific limitation on the organic resin that constitutes the organic resin film being directly applied onto the coating that has been formed on the metal sheet. As the organic resin, there can be exemplified thermoplastic resins, i.e., polyolefins such as crystalline polypropylene, crystalline propylene-ethylene copolymer, crystalline polybutene-1, crystalline poly 4-methylpenene-1, low-, intermediate- or high-density polyethylene, ethylene-vinyl acetate copolymer (EVA), ethylene-ethyl acrylate copolymer (EEA) and ionically crosslinked olefin copolymer (ionomer); aromatic vinyl copolymers such as polystyrene and styrene-butadiene copolymer; halogenated vinyl polymers such as polyvinyl chloride and vinylidene chloride resin; nitrile polymers such as acrylonitrile-styrene copolymer and acrylonitrile-styrene-butadiene copolymer; polyamides such as nylon 6, nylon 66, para- or metaxyleneadipamide; polyesters such as polyethylene terephthalate (PET) and polytetramethylene terephthalate; polycarbonates; and polyacetals such as polyoxymethylene. A thermoplastic resin film constituted by these thermoplastic resins can be used as the organic resin film.

Though a film formed by using the coating composition of the type of epoxyphenol or polyester can also be used as the organic resin film, it is specifically desired to form the organic resin film by using the thermoplastic resin.

In the invention, among the above thermoplastic resins, it is particularly desired to use the polyester resin as the organic resin film.

As the polyester resin suited for forming the organic resin film, there can be used a homopolyethylene terephthalate or a simple copolymerized polyester that contains acid components other than the terephthalic acid in an amount of not more than 30 mol% based on the acid components or that contains alcohol components other than the ethylene glycol in an amount of not more than 30 mol% based on the alcohol components, or there can be used a blend thereof.

As the acid components other than the terephthalic acid, there can be exemplified isophthalic acid, naphthalenedicarboxylic acid, cyclohexanedicarboxylic acid, P-β-oxyethoxybenzoic acid, diphenoxyethane-4,4'-dicarboxylic acid, 5-sulfoisophthalic acid mono sodium salt, hexahydroterephthalic acid, succinic acid, adipic acid, sebacic acid, dodecanedioic acid, dimeric acid, trimellitic acid and pyromellitic acid.

As the alcohol components other than the ethylene glycol, further, there can be exemplified glycol components such as propylene glycol, 1,4-butanediol, neopentyl glycol, 1,6-hexylene glycol, diethylene glycol, triethylene glycol, cyclohexanedimethanol, ethylene oxide adduct of bisphenol A, trimethyolpropane and pentaerythritol.

Specifically, it is desired to use any one of a polyethylene terephthalate resin comprising an ethylene terephthalate unit, a polyethylene terephthalate/polyethylene isophthalate copolymer resin, a polyethylene terephthalate/polybutylene terephthalate copolymer resin, a polyethylene terephthalate/polyethylene naphthalate copolymer resin or a blend of polyethylene terephthalate resin and polybutylene terephthalate resin.

The polyester resin should have a molecular weight in a range in which a film can be formed, should have an intrinsic viscosity $[\eta]$ of not less than 0.5 and, specifically, in a range of 0.52 to 0.70 as measured by using a phenol/tetrachloroethane mixed solvent from the standpoint of barrier property against corrosive components and mechanical properties, and should further have a glass transition point of not lower than 50°C and, specifically, in a range of 60°C to 80°C.

The polyester resin film can be, further, blended with known blending agents for films, such as lubricant, anti-blocking agent, pigment, antistatic agents and antioxidant according to known recipe.

The organic resin film of a thermoplastic resin may be formed by forming a thermoplastic resin film and, thereafter, applying it onto the metal sheet by the heat-adhesion method, or may be formed by the extrusion-lamination method by, first, extruding the heated and molten thermoplastic resin into a film by using an extruder and then applying it directly onto the metal sheet.

If the thermoplastic resin film is to be formed first and is applied, then the film may have been stretched. Here, however, it is desired that the film has not been stretched from the standpoint of formability and dent resistance.

Usually, it is desired that the thickness of the thermoplastic resin film is in a range of 5 to 40 $\mu$m.

The organic resin film of the thermoplastic resin can assume a two-layer constitution. If the polyester resin is used, the lower layer chiefly comprises an ethylene terephthalate unit and contains at least one of isophthalic acid or naphthalenedicarboxylic acid in an amount of 1 to 30 mol%. Namely, the lower layer is formed by using the polyester resin that contains the acid component in an amount larger than that of the polyester resin that forms the upper layer from the standpoint of, specifically, close adhesion of film during the working and dent resistance.

(Metal sheets)

As the metal sheet for use in the present invention, there can be used various steel sheets and aluminum sheets. As the steel sheet, there can be used the one that is obtained by annealing a cold-rolled steel sheet and, thereafter, subjecting it to the secondary cold rolling. There can be, further, used a clad steel sheet. As the aluminum sheet, there can be used the so-called pure aluminum sheet as well as an aluminum alloy sheet. In the invention, the aluminum alloy sheet is particularly preferably used.

The initial thickness of the metal sheet is not specifically limited and varies depending on the kind of the metal and use or size of the containers. The metal sheet, however, should have a thickness of, usually, 0.10 to 0.50 mm. Specifically, the steel sheet should have a thickness of 0.10 to 0.30 mm and the light metal sheet should have a thickness of 0.15 to 0.40 mm.

In the invention, by simply forming the coating that contains the polyester resin as the main resin, phenol resin and tannic acid directly on the metal sheet, it is allowed to form the organic resin film thereon and to form a seamless can that exhibits a sufficient degree of dent resistance, applicability for producing cans and hot water-resistant adhering property. Here, there may be used a metal sheet that has been subjected in advance to a conventional surface treatment such as conversion treatment or plating.

If a steel sheet is used as the metal sheet, the surface treatment may comprise one, two or more kinds of surface treatments such as zinc plating, tin plating, nickel plating, electrolytic chromate treatment, chromate treatment and phosphate treatment. If an aluminum sheet is used as the metal sheet, the surface treatment may comprise an inorganic conversion treatment such as treatment with chromic phosphate, treatment with zirconium phosphate or treatment with phosphate; an organic/inorganic composite conversion treatment based on a combination of the inorganic conversion treatment with a water-soluble resin such as acrylic resin or phenol resin, or an organic component such as tannic acid; or an application-type treatment based on a combination of a water-soluble resin such as acrylic resin with zirconium salt.

Fig. 1 illustrates a sectional structure of a coated metal sheet further covered with an organic resin film of the present invention. The coated metal sheet further covered with the organic resin film 1 includes coatings 3a and 3b, and organic resin films 4a and 4b formed on both surfaces of a metal sheet 2. In a concrete example shown in Fig. 1, the organic resin films 4a and 4b are formed, via the coatings 3a and 3b, on both the inner and outer surfaces of the metal sheet 2 that is forming a container. In the coated metal sheet further covered with the organic resin film of the invention, however, the coating and the organic resin film may have been formed at least on a surface that becomes the inner surface of the can body.

In the coated metal sheet of the invention, the coating containing the polyester resin as the main resin, phenol resin and tannic acid exhibits the same function as the organic resin film. Upon adjusting the thickness of the coating, therefore, the coated metal sheet can be formed into can bodies and can lids through the formation working without the need of forming the organic resin film on the coated metal sheet.

(Can body and method of its production)

The can body comprising the coated metal sheet further covered with the organic resin film of the invention, can be produced by a conventional method of forming cans.

The coated metal sheet further covered with the organic resin film of the present invention features excellent adhesion of films during the working, and can be formed into seamless cans through severe working such as draw working, draw-deep draw working, draw-ironing working, or draw-bend-elongation-ironing working without permitting the occurrence of breakage in the can walls or peeling of the organic resin film.

Through the bend-elongation based on the draw-redraw working or, further, through the ironing working, the thickness of the side wall of the seamless can is desirably reduced to 20 to 95% and, specifically, 25 to 85% of the initial thickness of the coated metal sheet further covered with the organic resin film.

The obtained seamless can is subjected to at least one stage of heat treatment to remove residual strain from the organic resin film caused by the working, to volatilize, from the surface, the lubricating agent used during the working and, further, to dry and cure the printing ink printed on the surface. The container after the heat treatment is quickly cooled or is left to cool and is, thereafter, as required, subjected to the necking of one stage or a multiplicity of stages followed by flanging to obtain a can that is to be wrap-seamed.

(Can lid and method of its production)

The can lid comprising the coated metal sheet or the coated metal sheet further covered with the organic resin film of the invention, can be produced by a conventional method of forming lids.

The can lid may assume a conventional shape such as of easy-open ends having a score that forms an opening for pouring out the content and a tab for opening.

EXAMPLES

The present invention will now be described in detail by way of concrete Examples to which only, however, the invention is in no way limited. In the following description, "parts" are "parts by mass".

(Synthesis of the polyester resins and preparation of the aqueous dispersion solutions)

Into a reaction vessel equipped with a stirrer, a heating device, a thermometer and a partial reflux-type cooler, there were fed polycarboxylic acids, polycarboxylic esters, polyhydric alcohols and a catalyst which are the starting materials in suitable amounts. The starting materials were then reacted at a reaction temperature of 210 to 250°C, under a reduced pressure of 2 mmHg or lower and for 4 to 6 hours to synthesize polyester resins A to N shown in Table 1. The obtained polyester resins A to N were measured for their compositions, glass transition temperatures (Tg) and acid values by the methods described below.

100 Parts of methyl ethyl ketone was added to 100 parts of the polyester resin synthesized above, and the mixture thereof was stirred at 80°C for one hour so that the polyester resin was dissolved. 4 Parts of 2-dimethylaminoethanol and 10 parts of 2-propanol were added thereto and, thereafter, 250 parts of ion-exchanged water was added thereto with stirring so that the polyester resin was dispersed in water. Next, by using an evaporator, the solvent was distilled off under reduced pressure, and the mixture was filtered to prepare an aqueous dispersion solution of the polyester resin of a solid content of about 30%.

(Compositions of the polyester resins)

The synthesized polyester resins A to N after dried in vacuum were dissolved in deuterated chloroform and their compositions were calculated based on a $^1$H-NMR measurement.
Equipment used: JNM-ECA400 manufactured by JEOL Ltd.

(Glass transition temperatures (Tg) of the polyester resins)

The glass transition temperatures of the synthesized polyester resins A to N were found by using a differential scanning calorimeter (DSC). The measurement was taken under the condition of elevating the temperature at a rate of 10°C /min.
Equipment used: EXSTAR 600 manufactured by Seiko Instruments Inc.

(Acid values of the polyester resins)

The acid values of the synthesized polyester resins A to N were found by a method specified under JIS K0070. The sample was accurately weighed to be 0.2 g and was dissolved in 20 ml of chloroform which was then titrated with 0.01N potassium hydroxide (ethanol solution) to find the acid value. Phenolphthalein was used as an indicator.

(Number average molecular weights)

The number average molecular weights of the synthesized polyester resins A to N were measured by the gel permeation chromatography (GPC) based on the standard polystyrene sample. Tetrahydrofuran was used as a solvent.

(Phenol resin)

Into a reaction vessel equipped with a stirrer, a heating device, a thermometer and a partial reflux-type cooler, there were fed 100 parts of m-cresol, 180 parts of an aqueous solution containing 37 mass% of formalin, and a suitable amount of sodium hydroxide as a catalyst. The mixture was reacted at 60°C for 3 hours and was, thereafter, dehydrated at 50°C under a reduced pressure. Next, 100 parts of n-butanol and a suitable amount of phosphoric acid as a catalyst were added thereto to carry out the reaction at 110°C for 4 hours. After the reaction has been finished, the obtained solution was refined to obtain an m-cresol resol type phenol resin of a solid content of 50% of which the methylol groups had been alkoxymethylated with the n-butanol.

(Preparation of aqueous coating compositions)

[Example 1]

By using 333 parts of an aqueous dispersion solution of the polyester resin A (100 parts of solid content), 40 parts of an n-butanol solution of the above phenol resin (20 parts of solid content), 3 parts of tannic acid, one part of dodecylbenzenesulfonic acid, 0.3 parts of triethylamine, 400 parts of 2-propanol and 1700 parts of ion-exchanged water, there was prepared an aqueous coating composition of a solid content of about 5%. As the tannic acid, there was used the "Tannic Acid" produced by Sigma Aldrich Co LLC. and as the dodecylbenzenesulfonic acid, there was used the "Dodecylbenzenesulfonic Acid (soft type) (mixture)" produced by Tokyo Chmical Industry Co., Ltd.

(Method of forming the coating on the metal sheet)

An aluminum sheet (Alloy sheet 3104, 0.28 mm in thickness) was used as the metal sheet. First, the aluminum sheet was dipped in an aqueous solution (50°C) containing 2% of an alkaline cleaner "Surf Cleaner 420N-2" (trade name) produced by Nippon Paint Co., Ltd. for 6 seconds so as to be washed with alkali. After washed with alkali, the aluminum sheet was washed with water, and was then dipped in an aqueous solution (50°C) containing 2% of sulfuric acid for 6 seconds so as to be washed with acid followed by washing with water and drying. By using a wire bar coater, the aqueous coating composition was applied onto the surface of the metal sheet that becomes the inner surface side of the can so as to form a coating of an arbitrary thickness. The aqueous coating composition was fired at 250°C for 30 seconds to form the coating on the metal sheet.

(Production of the coated metal sheet further covered with the organic resin film)

The obtained coated metal sheet was heated in advance at a temperature of 250°C. On both surfaces of the coated metal sheet, by using laminating rolls, there were thermally press-adhered the organic resin films, i.e., the thermoplastic resin films of a double-layer structure comprising a 8 $\mu$m-thick lower layer of a polyethylene terephthalate containing 15 mol% of isophthalic acid and a 8 $\mu$m-thick upper layer of a polyethylene terephthalate containing 2 mol% of isophthalic acid. The films were readily cooled with water to obtain a coated metal sheet further covered with the organic resin film.

(Production of the seamless cans)

A paraffin wax was electrostatically applied onto both surfaces of the above coated metal sheet further covered with the organic resin film which was then punched in a circular shape of a diameter of 156 mm to form a shallowly drawn cup. Next, the shallowly drawn cup was subjected to the redraw-ironing working, doming, trimming at the open edge portion and, thereafter, to the heat treatment at 201°C for 75 seconds and, further, at 210°C for 80 seconds. The open end was, further, subjected to the necking and flanging to produce a seamless can having a 211-diameter at the can body and a 206-diameter at the neck portion, and having a capacity of 500 ml. The seamless can possessed the following specifications.
Diameter of can body: 66 mm
Height of can body: 168 mm
Average reduction ratio of sheet thickness in the can wall with respect to the initial sheet thickness: 60%

[Examples 2 to 28, Comparative Examples 1 to 4]

Coated metal sheets, coated metal sheets further covered with the organic resin film, and seamless cans were produced in the same manner as in Example 1 but preparing aqueous coating compositions while suitably changing the kinds of the polyester resins that were used, amounts of the components and concentrations of the solid contents. Table 2 shows the kinds of the polyester resins that were used, amounts (parts) of the solid contents of the phenol resins, tannic acid and acid catalyst (dodecylbenzenesulfonic acid) per 100 parts of the solid content of the polyester resins in the aqueous coating compositions, and thicknesses of the formed coatings.

[Comparative Example 5]

A melamine resin was used as the curing agent. Namely, by using 333 parts of an aqueous dispersion solution of the polyester resin A (100 parts of solid content), 43 parts of a solution of the melamine resin (30 parts of solid content), 3 parts of tannic acid, one part of dodecylbenzenesulfonic acid, 0.3 parts of triethylamine, 400 parts of 2-propanol and 1900 parts of ion-exchanged water, there was prepared an aqueous coating composition of a solid content of about 5%. A coated metal sheet, a coated metal sheet further covered with an organic resin film and a seamless can were produced in the same manner as in Example 1 but using the above aqueous coating composition. As the melamine resin, there was used the melamine resin "NIKALAC MW-22 (solid content of about 70%)" produced by SANWA Chemical Co., Ltd.

[Comparative Example 6]

An aluminum sheet having its surfaces treated with chromic phosphate (chemical conversion-treated) (Alloy sheet 3104, 0.28 mm in thickness, weight of chromium in the surface-treating film: 20 mg/m$^2$) was used as the metal sheet. A coated metal sheet further covered with the organic resin film was produced by forming the organic resin film thereon in a manner as described above in Examples, and from which a seamless can was produced.

(Evaluating the peeling in the flange portion during the heat treatment)

To evaluate the peeling in the flange portion during the heat treatment, the can body was subjected up to the working of trimming as described above in the paragraph of "Production of the seamless can". Thereafter, by using an oven, the can was heat-treated at 201°C for 75 seconds and then at 210°C for 80 seconds. Thereafter, the open end (flange-forming portion) of the can body was observed through a microscope to evaluate the degree the organic resin film has peeled off the open end of the can body. Table 2 shows the results of evaluation.
⊚: Maximum length of the peeled portion is less than 0.05 mm.
○: Maximum length of the peeled portion is not less than 0.05 mm but is less than 0.1 mm.
Δ: Maximum length of the peeled portion is not less than 0.1 mm but is less than 0.2 mm.

×: Maximum length of the peeled portion is not less than 0.2 mm.

(Evaluating the hot water-resistant adhering property)

To evaluate the hot water-resistant adhering property, the can body was produced as described above in the paragraph of "Production of the seamless can". Thereafter, the inner surface of the neck portion at its smallest diameter portion was scratched with a cutter knife into a depth to reach the metal surface along the circumference of the can. The seamless can was dipped in hot water of 100°C for 10 minutes, and the peeled state of the organic resin film at the neck portion was observed and evaluated. The evaluated results were as shown in Table 2.
◎: No peeling was seen along he whole circumference of the can.
○: Peeling was seen over the length of less than 10% of the whole circumference of the can.
Δ: Peeling was seen over the length of not less than 10% but less than 30% of the whole circumference of the can.
×: Peeling was seen over the length of not less than 30% of the whole circumference of the can.

(Evaluating the dent resistance)

To evaluate the dent resistance, the can body was produced as described above in the paragraph of "Production of the seamless can". Thereafter, the obtained seamless can was filled with 500 g of an acidic model solution containing salt, and was wrap-seamed with a lid in a customary manner. Thereafter, the can was left to stand still sideways. A one-kilogram metal weight having a spherical surface 66 mm in diameter was fallen vertically on the lower surface portion of the side wall of the can from a height of 60 mm at room temperature to cause the can body depressed (indented). Thereafter, the can body was stored with its lid facing upward at 37°C for 10 days, and the corroded state at the depressed (indented) portion on the inner surface of the can was observed with the eye to evaluate the dent resistance.
The model solution used for the test was the one that contained 0.2% of sodium chloride and to which the citric acid was added such that the pH was adjusted to be 2.5.
◎: No corrosion was seen in the indented portion.
○: Almost no corrosion was seen in the indented portion.
Δ: Corrosion was seen locally in the indented portion.
×: Corrosion was seen over the whole indented portion.

Table 1

| | | Dicarboxylic acid component (molar ratio) | | | | Diol component (molar ratio) | | | |
|---|---|---|---|---|---|---|---|---|---|
| | | Aromatic dicarboxylic acid | | Aliphatic dicarboxylic acid | | *1 | *2 | *3 | *4 |
| | | *5 | *6 | *7 | *8 | | | | |
| Synthesis Example 1 | polyester resin A | 78 | 10 | 12 | | 15 | 55 | 30 | |
| Synthesis Example 2 | polyester resin B | 71 | 14 | 15 | | 13 | 47 | 40 | |
| Synthesis Example 3 | polyester resin C | 85 | 7 | 8 | | 18 | 62 | 20 | |
| Synthesis Example 4 | polyester resin D | 68 | 15 | 17 | | 12 | 43 | 45 | |
| Synthesis Example 5 | polyester resin E | 90 | 5 | 5 | | 18 | 68 | 14 | |
| Synthesis Example 6 | polyester resin F | 76 | 10 | 14 | | 44 | 32 | | 24 |
| Synthesis Example 7 | polyester resin G | 73 | 10 | 17 | | 48 | 24 | | 28 |
| Synthesis Example 8 | polyester resin H | 69 | 12 | 19 | | 52 | 15 | | 33 |
| Synthesis Example 9 | polyester resin I | 55 | 31 | | 14 | 50 | | | 50 |
| Synthesis Example 10 | polyester resin J | 62 | 14 | 24 | | 60 | | | 40 |
| Synthesis Example 11 | polyester resin K | 93 | 3 | 4 | | 20 | 70 | 10 | |
| Synthesis Example 12 | polyester resin L | 100 | | | | 22 | 78 | | |
| Synthesis Example 13 | polyester resin M | 51 | 34 | 15 | | 33 | 40 | 27 | |
| Synthesis Example 14 | polyester resin N | 41 | 45 | 14 | | 63 | 13 | 24 | |

*1: Ethylene glycol, *2: Propylene glycol, *3: 1,4-butane diol, *4: Neopentyl glycol,

*5: Terephthalic acid, *6: Isophthalic acid, *7:Sebacic acid, *8: Adipic acid

Table 1 (continued)

| | Molar ratio of aromatic dicarboxylic acid : aliphatic dicarboxylic acid | Tg (°C) | Acid value (KOH mg/g) | Number average molecular weight |
|---|---|---|---|---|
| Synthesis Example 1 | 88 : 12 | 41 | 18 | 11000 |
| Synthesis Example 2 | 85 : 15 | 29 | 17 | 11600 |
| Synthesis Example 3 | 92 : 8 | 53 | 19 | 9800 |
| Synthesis Example 4 | 83 : 17 | 23 | 16 | 13000 |
| Synthesis Example 5 | 95 : 5 | 60 | 19 | 9500 |
| Synthesis Example 6 | 86 : 14 | 40 | 13 | 12200 |
| Synthesis Example 7 | 83 : 17 | 34 | 12 | 12900 |
| Synthesis Example 8 | 81 : 19 | 28 | 10 | 13600 |
| Synthesis Example 9 | 86 : 14 | 40 | 15 | 9000 |
| Synthesis Example 10 | 76 : 24 | 18 | 7 | 15000 |
| Synthesis Example 11 | 96 : 4 | 66 | 20 | 8900 |
| Synthesis Example 12 | 100 : 0 | 80 | 21 | 8000 |
| Synthesis Example 13 | 85 : 15 | 32 | 35 | 9400 |
| Synthesis Example 14 | 86 : 14 | 39 | 44 | 10600 |

| | Polyester resin | | | | | Curing agent | |
|---|---|---|---|---|---|---|---|
| | Species | *1 | Tg (°C) | Acid value (KOHmg/g) | Parts by mass | Species | Parts by mass |
| Ex. 1 | polyester resin A | 88 : 12 | 41 | 18 | 100 | phenol resin | 20 |
| Ex. 2 | polyester resin B | 85 : 15 | 29 | 17 | 100 | phenol resin | 20 |
| Ex. 3 | polyester resin C | 92 : 8 | 53 | 19 | 100 | phenol resin | 20 |
| Ex. 4 | polyester resin D | 83 : 17 | 23 | 16 | 100 | phenol resin | 20 |
| Ex. 5 | polyester resin E | 95 : 5 | 60 | 19 | 100 | phenol resin | 20 |
| Ex. 6 | polyester resin F | 86 : 14 | 40 | 13 | 100 | phenol resin | 20 |
| Ex. 7 | polyester resin G | 83 : 17 | 34 | 12 | 100 | phenol resin | 20 |
| Ex. 8 | polyester resin H | 81 : 19 | 28 | 10 | 100 | phenol resin | 20 |
| Ex. 9 | polyester resin I | 86 : 14 | 40 | 15 | 100 | phenol resin | 20 |
| Ex. 10 | polyester resin J | 76 : 24 | 18 | 7 | 100 | phenol resin | 20 |
| Ex. 11 | polyester resin K | 96 : 4 | 66 | 20 | 100 | phenol resin | 20 |
| Ex. 12 | polyester resin L | 100 : 0 | 80 | 21 | 100 | phenol resin | 20 |
| Ex. 13 | polyester resin M | 85 : 15 | 32 | 35 | 100 | phenol resin | 20 |
| Ex. 14 | polyester resin N | 86 : 14 | 39 | 44 | 100 | phenol resin | 20 |
| Ex. 15 | polyester resin C | 92 : 8 | 53 | 19 | 100 | phenol resin | 10 |
| Ex. 16 | polyester resin A | 88 : 12 | 41 | 18 | 100 | phenol resin | 30 |
| Ex. 17 | polyester resin B | 85 : 15 | 29 | 17 | 100 | phenol resin | 40 |
| Comp. Ex. 1 | polyester resin H | 81 : 19 | 28 | 10 | 100 | phenol resin | 60 |
| Ex. 18 | polyester resin G | 83 : 17 | 34 | 12 | 100 | phenol resin | 20 |
| Ex. 19 | polyester resin F | 86 : 14 | 40 | 13 | 100 | phenol resin | 20 |

Table 2

*1: Molar ratio of aromatic dicarboxylic acid : aliphatic dicarboxylic acid

Table 2 (continued)

|  | Acid catalys | Tannic acid | Film thickne | Evaluation | | |
|---|---|---|---|---|---|---|
|  | Parts by mass | Parts by mass | (μm) | Peel at flange portion during heat treatment | Hot water-resistant adhering property | Dent resistance |
| Ex. 1 | 1 | 3 | 0.7 | ◎ | ◎ | ◎ |
| Ex. 2 | 1 | 3 | 0.7 | ◎ | ◎ | ◎ |
| Ex. 3 | 1 | 3 | 0.7 | ◎ | ◎ | ◎ |
| Ex. 4 | 1 | 3 | 0.7 | ○ | ◎ | ○ |
| Ex. 5 | 1 | 3 | 0.7 | ◎ | ◎ | ○ |
| Ex. 6 | 1 | 3 | 0.7 | ◎ | ◎ | ◎ |
| Ex. 7 | 1 | 3 | 0.7 | ◎ | ◎ | ◎ |
| Ex. 8 | 1 | 3 | 0.7 | ◎ | ◎ | ○ |
| Ex. 9 | 1 | 3 | 0.7 | ◎ | ◎ | ○ |
| Ex. 10 | 1 | 3 | 0.7 | △ | ○ | △ |
| Ex. 11 | 1 | 3 | 0.7 | ◎ | ◎ | △ |
| Ex. 12 | 1 | 3 | 0.7 | ◎ | ◎ | △ |
| Ex. 13 | 1 | 3 | 0.7 | ○ | ◎ | ○ |
| Ex. 14 | 1 | 3 | 0.7 | ◎ | ○ | △ |
| Ex. 15 | 1 | 3 | 0.7 | ○ | ○ | ◎ |
| Ex. 16 | 1 | 3 | 0.7 | ◎ | ◎ | ○ |
| Ex. 17 | 1 | 3 | 0.7 | ◎ | ◎ | ○ |
| Comp. Ex. 1 | 1 | 3 | 0.7 | △ | ○ | △ |
| Ex. 18 | 1 | 3 | 0.4 | ◎ | ◎ | ○ |
| Ex. 19 | 1 | 3 | 2.5 | ○ | ◎ | ◎ |

Table 2 (continued)

| | Polyester resin | | | | | Curing agent | |
|---|---|---|---|---|---|---|---|
| | Species | *1 | Tg (°C) | Acid value (KOHmg/g) | Parts by mass | Species | Parts by mass |
| Ex. 20 | polyester resin A | 88 : 12 | 41 | 18 | 100 | phenol resin | 20 |
| Ex. 21 | polyester resin H | 81 : 19 | 28 | 10 | 100 | phenol resin | 20 |
| Ex. 22 | polyester resin A | 88 : 12 | 41 | 18 | 100 | phenol resin | 20 |
| Ex. 23 | polyester resin C | 92 : 8 | 53 | 19 | 100 | phenol resin | 20 |
| Ex. 24 | polyester resin A | 88 : 12 | 41 | 18 | 100 | phenol resin | 20 |
| Comp. Ex. 2 | polyester resin A | 88 : 12 | 41 | 18 | 100 | phenol resin | 20 |
| Ex. 25 | polyester resin A | 88 : 12 | 41 | 18 | 100 | phenol resin | 20 |
| Ex. 26 | polyester resin A | 88 : 12 | 41 | 18 | 100 | phenol resin | 20 |
| Ex. 27 | polyester resin G | 83 : 17 | 34 | 12 | 100 | phenol resin | 20 |
| Ex. 28 | polyester resin C | 92 : 8 | 53 | 19 | 100 | phenol resin | 40 |
| Comp. Ex. 3 | polyester resin B | 85 : 15 | 29 | 13 | 100 | phenol resin | 20 |
| Comp. Ex. 4 | polyester resin A | 88 : 12 | 41 | 18 | 100 | – | – |
| Comp. Ex. 5 | polyester resin A | 88 : 12 | 41 | 18 | 100 | melamin resin | 30 |
| Comp. Ex. 6 | treated with chromic phosphate | | | | | | |

*1: Molar ratio of aromatic dicarboxylic acid : aliphatic dicarboxylic acid

Table 2 (continued)

| | Acid catalys | Tannic acid | Film thickne | Evaluation | | |
|---|---|---|---|---|---|---|
| | Parts by mass | Parts by mass | (µm) | Peel at flange portion during heat treatment | Hot water-resistant adhering property | Dent resistance |
| Ex. 20 | 1 | 0.5 | 0.7 | ◎ | ○ | ◎ |
| Ex. 21 | 1 | 1 | 0.7 | ◎ | ◎ | ○ |
| Ex. 22 | 1 | 5 | 0.7 | ◎ | ◎ | ◎ |
| Ex. 23 | 1 | 8 | 0.7 | ◎ | ◎ | ○ |
| Ex. 24 | 1 | 0.2 | 0.7 | ◎ | △ | ◎ |
| Comp. Ex. 2 | 1 | 15 | 0.7 | ◎ | ◎ | △ |
| Ex. 25 | 0.2 | 3 | 0.7 | ○ | ○ | ◎ |
| Ex. 26 | 0.5 | 3 | 0.7 | ◎ | ◎ | ◎ |
| Ex. 27 | 3 | 3 | 0.7 | ◎ | ◎ | ○ |
| Ex. 28 | 0 | 3 | 0.7 | △ | △ | ○ |
| Comp. Ex. 3 | 1 | 0 | 0.7 | ◎ | × | ◎ |
| Comp. Ex. 4 | 1 | 3 | 0.7 | × | × | ◎ |
| Comp. Ex. 5 | 1 | 3 | 0.7 | ◎ | × | ○ |
| Comp. Ex. 6 | treated with chromic phosphate | | | ◎ | ○ | × |

Industrial Applicability:

In forming the seamless cans by using the coated metal sheet further covered with the organic resin film of the invention that is obtained by forming the organic resin film on the coating of the metal sheet, there are realized excellent dent resistance to cope with even strongly corrosive contents as well as excellent applicability for producing cans without the probability of peeling of the organic resin film at the flange-forming portion even in the step of heat treatment after the can walls have been formed. Even if subjected to a high temperature and highly humid environment such as in the step of sterilization, the coated metal sheet further covered with the organic resin film of the invention does not permit the organic resin film to peel and exhibits excellent hot water-resistant adhering property lending itself well for producing can bodies and can lids for containing strongly corrosive acidic beverages.

Description of Reference Numerals:

1: coated metal sheet further covered with organic resin film
2: metal sheet
3: coating
4: organic resin film

**Claims**

1.   A coated metal sheet comprising a coating on at least one surface of a metal sheet, the coating containing a main resin, a phenol resin as a curing agent and a tannic acid as an additive, wherein the main resin is a resin that is capable of forming a crosslinked structure with the phenol resin, wherein the phenol resin is contained in an amount in a range of 5 to 40 parts by mass per 100 parts by mass of the main resin, and wherein the tannic acid is contained in an amount in a range of 0.1 to 10 parts by mass per 100 parts by mass of the main resin.

2.   The coated metal sheet according to claim 1, wherein the coating, further, contains an acid catalyst as a curing catalyst.

3.   The coated metal sheet according to claim 1 or 2, wherein the main resin is at least the one selected from a polyester resin, an acrylic resin and an epoxy resin.

4.   The coated metal sheet according to claim 3, wherein the main resin is a polyester resin.

5.   The coated metal sheet according to claim 4, wherein the polyester resin has a glass transition temperature of 15°C to 80°C.

6.   The coated metal sheet according to claim 4 or 5, wherein, as dicarboxylic acid components for constituting the polyester resin, the polyester resin contains an aromatic dicarboxylic acid and an aliphatic dicarboxylic acid having 6 to 14 carbon atoms at a molar ratio of 95:5 to 80:20.

7.   The coated metal sheet according to any one of claims 4 to 6, wherein the polyester resin has an acid value of 5 to 40 mgKOH/g.

8.   The coated metal sheet according to any one of claims 1 to 7, wherein the phenol resin is the one obtained by alkoxymethylating, with an n-butanol, a methylol group of a resol-type phenol resin derived from an m-cresol.

9.   The coated metal sheet according to any one of claims 1 to 8, wherein the coating comprises an aqueous coating composition that contains a water-soluble and/or water-dispersible polyester resin, a phenol resin, a tannic acid and an aqueous medium.

10.  The coated metal sheet according to any one of claim 1 to 9, wherein the metal sheet is an aluminum sheet.

11.  A coated metal sheet further covered with an organic resin film obtained by forming an organic resin film on a coating of the coated metal sheet of any one of claims 1 to 10.

**12.** A can body made from the coated metal sheet further covered with the organic resin film of claim 11.

**13.** A can lid made from the coated metal sheet further covered with the organic resin film of claim 11.

**14.** An aqueous coating composition for a metal sheet containing a water-soluble and/or water-dispersible polyester resin, a phenol resin, an acid catalyst, a tannic acid and an aqueous medium, wherein the phenol resin is contained in an amount in a range of 5 to 40 parts by mass per 100 parts by mass of the polyester resin, and wherein the tannic acid is contained in an amount in a range of 0.1 to 10 parts by mass per 100 parts by mass of the polyester resin.

**Patentansprüche**

**1.** Beschichtetes Metallblech, umfassend eine Beschichtung auf mindestens einer Fläche eines Metallblechs, wobei die Beschichtung ein Hauptharz, ein Phenolharz als einen Härter und eine Tanninsäure als ein Additiv enthält, wobei das Hauptharz ein Harz ist, das in der Lage ist, eine quervernetzte Struktur mit dem Phenolharz zu bilden, wobei das Phenolharz in einer Menge im Bereich von 5 bis 40 Massenteile pro 100 Massenteile des Hauptharzes enthalten ist und wobei die Tanninsäure in einer Menge im Bereich von 0,1 bis 10 Massenteile pro 100 Massenteile des Hauptharzes enthalten ist.

**2.** Beschichtetes Metallblech nach Anspruch 1, wobei die Beschichtung ferner einen Säurekatalysator als einen Härtungskatalysator enthält.

**3.** Beschichtetes Metallblech nach Anspruch 1 oder 2, wobei das Hauptharz mindestens das eine ist, das aus einem Polyesterharz, einem Acrylharz und einem Epoxidharz ausgewählt ist.

**4.** Beschichtetes Metallblech nach Anspruch 3, wobei das Hauptharz ein Polyesterharz ist.

**5.** Beschichtetes Metallblech nach Anspruch 4, wobei das Polyesterharz eine Glasübergangstemperatur von 15 °C bis 80 °C hat.

**6.** Beschichtetes Metallblech nach Anspruch 4 oder 5, wobei als Dicarbonsäurebestandteile zum Bilden des Polyesterharzes das Polyesterharz eine aromatische Dicarbonsäure und eine aliphatische Dicarbonsäure mit 6 bis 14 Kohlenstoffatomen bei einem Molverhältnis von 95:5 bis 80:20 enthält.

**7.** Beschichtetes Metallblech nach einem der Ansprüche 4 bis 6, wobei das Polyesterharz einen Säurewert von 5 bis 40 mg KOH/g hat.

**8.** Beschichtetes Metallblech nach einem der Ansprüche 1 bis 7, wobei das Phenolharz das ist, das durch Alkoxymethylierung einer Methylolgruppe eines Phenolharzes vom Typ Resol, das von einem m-Kresol abstammt, mit einem n-Butanol erhalten wird.

**9.** Beschichtetes Metallblech nach einem der Ansprüche 1 bis 8, wobei die Beschichtung eine wässrige Beschichtungszusammensetzung umfasst, die ein wasserlösliches und/oder wasserdispergierbares Polyesterharz, ein Phenolharz, eine Tanninsäure und ein wässriges Medium enthält.

**10.** Beschichtetes Metallblech nach einem der Ansprüche 1 bis 9, wobei das Metallblech ein Aluminiumblech ist.

**11.** Beschichtetes Metallblech, das ferner mit einem organischen Harzfilm bedeckt ist, der durch Bilden eines organischen Harzfilms auf einer Beschichtung des beschichteten Metallblechs nach einem der Ansprüche 1 bis 10 erhalten wird.

**12.** Dosenkörper, der aus dem beschichteten Metallblech hergestellt ist, das ferner mit dem organischen Harzfilm nach Anspruch 11 bedeckt ist.

**13.** Dosendeckel, der aus dem beschichteten Metallblech hergestellt ist, das ferner mit dem organischen Harzfilm nach Anspruch 11 bedeckt ist.

**14.** Wässrige Beschichtungszusammensetzung für ein Metallblech, die ein wasserlösliches und/oder wasserdispergier-

**EP 3 205 494 B1**

bares Polyesterharz, ein Phenolharz, einen Säurekatalysator, eine Tanninsäure und ein wässriges Medium enthält, wobei das Phenolharz in einer Menge im Bereich von 5 bis 40 Massenteile pro 100 Massenteile des Polyesterharzes enthalten ist und wobei die Tanninsäure in einer Menge im Bereich von 0,1 bis 10 Massenteile pro 100 Massenteile des Polyesterharzes enthalten ist.

**Revendications**

1. Tôle métallique revêtue comprenant un revêtement sur au moins une surface d'une tôle métallique, le revêtement comprenant une résine principale, une résine phénolique en tant qu'agent durcissant et un acide tannique en tant qu'additif, la résine principale étant une résine qui est capable de former une structure réticulée avec la résine phénolique, la résine phénolique étant contenue dans une quantité dans une plage de 5 à 40 parties en masse pour 100 parties en masse de la résine principale, et l'acide tannique étant contenu dans une quantité dans une plage de 0,1 à 10 parties en masse pour 100 parties en masse de la résine principale.

2. Tôle métallique revêtue selon la revendication 1, dans laquelle le revêtement contient en outre un catalyseur acide en tant que catalyseur de durcissement.

3. Tôle métallique revêtue selon la revendication 1 ou 2, dans laquelle la résine principale est au moins celle choisie parmi une résine polyester, une résine acrylique et une résine époxy.

4. Tôle métallique revêtue selon la revendication 3, dans laquelle la résine principale est une résine polyester.

5. Tôle métallique revêtue selon la revendication 4, dans laquelle la résine polyester a une température de transition vitreuse de 15 °C à 80 °C.

6. Tôle métallique revêtue selon la revendication 4 ou 5, dans laquelle, en tant que composants acide dicarboxylique destinés à constituer la résine polyester, la résine polyester contient un acide dicarboxylique aromatique et un acide dicarboxylique aliphatique ayant 6 à 14 atomes de carbone selon un rapport molaire de 95:5 à 80:20.

7. Tôle métallique revêtue selon l'une quelconque des revendications 4 à 6, dans laquelle la résine polyester a une valeur d'acide de 5 à 40 mgKOH/g.

8. Tôle métallique revêtue selon l'une quelconque des revendications 1 à 7, dans laquelle la résine phénolique est celle obtenue par alcoxyméthylation, avec un n-butanol, d'un groupe méthylol d'une résine phénolique de type résol dérivée d'un m-crésol.

9. Tôle métallique revêtue selon l'une quelconque des revendications 1 à 8, dans laquelle le revêtement comprend une composition aqueuse de revêtement qui contient une résine polyester hydrosoluble et/ou hydrodispersible, une résine phénolique, un acide tannique et un milieu aqueux.

10. Tôle métallique revêtue selon l'une quelconque des revendications 1 à 9, dans laquelle la tôle métallique est une tôle en aluminium.

11. Tôle métallique revêtue qui est en outre revêtue avec un film de résine organique obtenu par formation d'un film de résine organique sur un revêtement de la tôle métallique revêtue de l'une quelconque des revendications 1 à 10.

12. Corps de bidon constitué de la tôle métallique revêtue en outre couverte par le film de résine organique de la revendication 11.

13. Couvercle de bidon constitué de la tôle métallique revêtue en outre couverte par le film de résine organique de la revendication 11.

14. Composition aqueuse de revêtement pour une tôle métallique contenant une résine polyester hydrosoluble et/ou hydrodispersible, une résine phénolique, un catalyseur acide, un acide tannique et un milieu aqueux, la résine phénolique étant contenue dans une quantité dans une plage de 5 à 40 parties en masse pour 100 parties en masse de la résine polyester, et l'acide tannique étant contenu dans une quantité dans une plage de 0,1 à 10 parties en masse pour 100 parties en masse de la résine polyester.

Fig. 1

4a    3a    2    3b    4b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013047378 A
- JP 2013072001 A
- JP 2002105393 A
- WO 2007025297 A
- WO 2011061784 A
- JP 2001246695 A
- JP 2007076012 A
- JP H7195618 A
- JP 2005104146 A
- WO 200791740 A